(19) Europäisches Patentamt
European Patent Office
Office européen des brevets

(11) Publication number: **0 272 740 B1**

(12) **EUROPEAN PATENT SPECIFICATION**

(45) Date of publication of patent specification: **27.11.91** (51) Int. Cl.5: **A01M 7/00**

(21) Application number: **87202467.4**

(22) Date of filing: **08.12.87**

(54) **Spray device.**

(30) Priority: **23.12.86 NL 8603285**

(43) Date of publication of application:
**29.06.88 Bulletin 88/26**

(45) Publication of the grant of the patent:
**27.11.91 Bulletin 91/48**

(84) Designated Contracting States:
**AT BE CH DE ES FR GB GR IT LI NL**

(56) References cited:
**DE-A- 1 607 382**
**DE-A- 3 404 760**
**NL-A- 7 100 910**
**US-A- 3 472 454**

(73) Proprietor: **Van den Munckhof, Peter Jozef Marie**
**Lindweg 1**
**NL-5961 AK Horst(NL)**

Proprietor: **Van den Munckhof, Mathijs Rene Maria Jozef**
**Westerholtstraat 51**
**NL-5961 BH Horst(NL)**

(72) Inventor: **Van den Munckhof, Peter Jozef Marie**
**Lindweg 1**
**NL-5961 AK Horst(NL)**
Inventor: **Van den Munckhof, Mathijs Rene Maria Jozef**
**Westerholtstraat 51**
**NL-5961 BH Horst(NL)**

(74) Representative: **Prins, Hendrik Willem et al**
**Octrooibureau Arnold & Siedsma Sweelinckplein, 1**
**NL-2517 GK The Hague(NL)**

**EP 0 272 740 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a spray device comprising a frame and at least one spray boom connected to the frame and carrying an air hose connected via an air inlet to a fan having at least one air outlet and carrying spray nozzles connected via lines to a reservoir for spraying agent, for generating a spraying agent flow cooperating with an air flow leaving the air outlet.

If crops are sprayed with this known spray device the spraying agent will substantially come into contact only with those portions of the crop facing toward or easily accessible from the spraying means.

In the case of crops the foliage of which remains in the direct vicinity of the ground, such as strawberries for instance, and crops which grow in the shape of a wall, such as cucumbers, tomatoes and rows of bushes or trees, large portions of these crops cannot be reached by the spraying agent.

US-A-3.472.454 discloses a sprayer system in accordance with the prior art portion of claim 1, in which an inflatable air sleeve suspends downwardly from a spray boom and is connected thereto by cords passing through eyelets in the sleeve and drawn around the spray boom.

The air sleeve comprises a plurality of air outlets spaced apart at intervals along the length of the sleeve. A spray agent nozzle is arranged near each air outlet, and attached to the spray boom via a support to which the air outlet is also connected. This spray system is cumbersome, in that the air outlets are fixed to the inflatable, flexible air sleeve. In addition, the air stream released by the air outlets is irregular over the length of the spray boom. Accordingly, the dosing rate for the crop to be sprayed is dependent on the distance of the crop rows relative to the nearest air outlet passing along.

The invention has for its object to provide a spray device whereby the spraying agent can come to a much larger extent into contact with the crop and in order to achieve an optimum cooperation between on the one hand the spraying agent flow and on the other the air flow, which cooperation can also depend on the direction in which and the speed at which the spray device is moved relative to the crop. This is obtained according to the invention as claimed in claim 1, in that the spray boom comprises a framework forming with the air hose a slit-like air outlet which extends over a substantial part of the length of the spray boom and comprising guiding means for guiding the air flow relative to the spraying agent flow and/or the crop to be sprayed.

When two air outlets are disposed at an acute angle relative to each other, spraying is performed on the one hand in a direction concurring with travel direction and on the other in a direction facing away therefrom, so that so-called shadow areas are substantially avoided.

If two air outlets are disposed facing away from each other in opposing directions, it is possible to spray both sides of a crop simultaneously via narrow passages running through the crop. Particularly advantageous in this case is the use of combinations of pairs of air outlets, whereby the pairs of air outlets are disposed diametrically relative to each other and within each pair the air outlets enclose an acute angle relative to each other.

A good co-operation between spraying agent flow and air flow is achieved if the spray nozzle is arranged downstream of an air outlet. In order to avoid an interference between the spray nozzle and the air flow it is recommended that the spray nozzle is arranged adjacent to the air flow generated by the air outlet.

Depending on the crop a specifically positioned spray boom can be employed. For instance the air slit may be located during spraying in a plane that is parallel to a row of plants and the spray boom may be attached to the frame in horizontal, upright and/or suspended position.

Preferred features are set out in the dependent claims. Mentioned and other features will be elucidated on the basis of a number of embodiments of the spraying device according to the invention and with reference to the annexed drawings.

In the drawing:

Fig. 1 shows a perspective, partly broken away view of a spraying device according to the invention mounted on a tractor;

fig. 2-5 each show a section along the line II-II from fig. 1 of various embodiments of the spray boom; and

fig. 6-8 show respectively a top view, a rear view and a perspective view of in each case a different spraying device according to the invention.

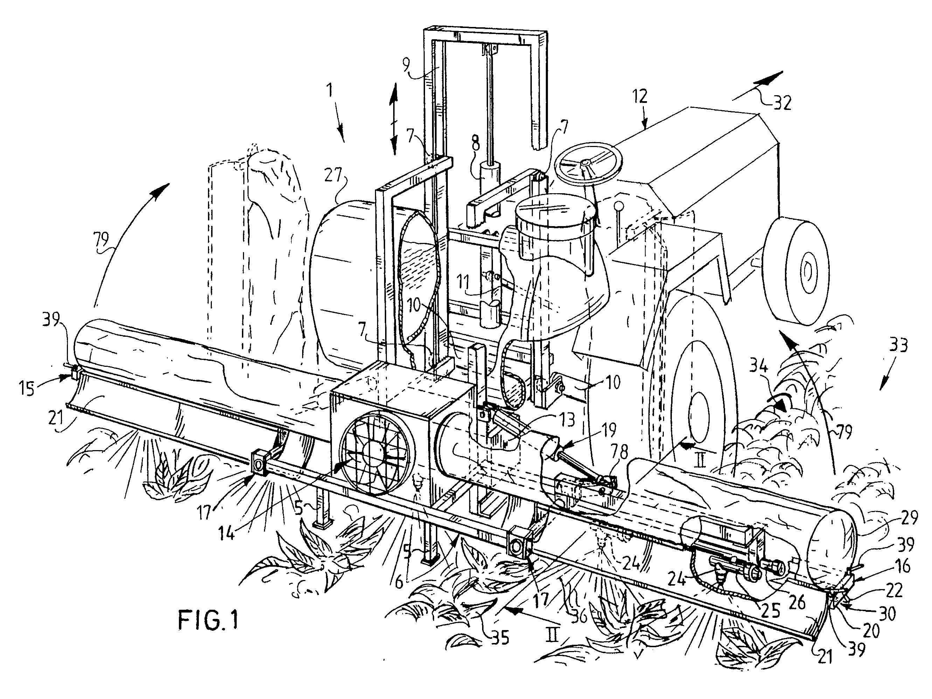

Fig. 1 shows a spraying device 1 in accordance with the invention. The device comprises a frame 6 provided with legs 5, which frame is guided reciprocally with rolls 7 using a cylinder 8 in a guiding frame 9 which is coupled via rods 10 and 11 to a tractor 12. A compressor 13 placed on frame 6 and a fan 14 are driven via a flexible drive shaft (not shown) coupled to the tractor 12.

Attached to frame 6 on each side is a spray boom 15, 16 which is attached to frame 6 for folding out via hinges 17 and a crank 78 using a cylinder 19. Spray booms 15 and 16 can be displaced between the horizontal position shown with full lines and the upright position indicated with dashed lines (arrow 79). Each spray boom 15, 16 comprises a framework 20 to which guide plates 21, 22 are attached for pivoting via hinges 23. Further attached to framework 20 are lines 25, 26 provided with spray nozzles 24. Lines 25 and 26 are connected via the compressor 13 for liquid communication with a reservoir 27 for spraying agent 28.

The framework (20) is further provided with an air chamber 29 which takes the form of a flexible hose connecting on one side onto framework 20, the two forming the slit-like air outlet 30, and on the other side to an air inlet 31 coupled to the fan 14.

The operation of the spray device 1 is as follows. The tractor 12 travels in the direction of arrow 32 through a field 33 having crops 35 cultivated in beds 34. The spray nozzles 24 generate flows 36 of spraying agent, which co-operate with an air flow 37 leaving the air outlet 30. The flows 36 and 37 co-operate in the sense that the air flow carries the spraying agent flow further between the crop 35 and in addition sets the foliage in motion and bends it over so that portions of the crop normally facing away from the spraying agent will now come into contact with it. Spraying efficiency is in this way improved.

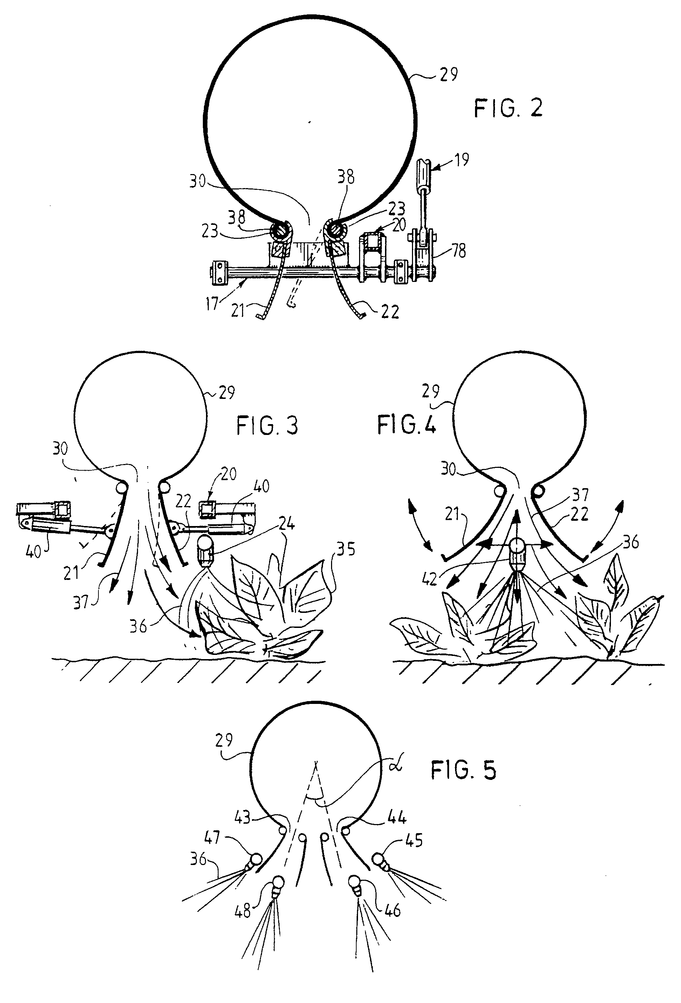

In fig. 2 the guide plates 21 are attached for clamping to the frame tubes 38 and locked in a required position relative to the crop 35 with locking members 39. Guide plates 21, 22 can diverge from or converge towards (dash line position) each other from the air outlet 30, so that the speed of the exiting air/spraying agent flow is respectively decreased or increased. When guide plates 21, 22 are disposed substantially parallel to each other this speed remains essentially constant.

Shown better in fig. 3 is the position of the spray nozzle 24 relative to the air flow 37 generated by the air outlet 30. Spray nozzles 24 is arranged adjacent to the air outlet 30 and at the side of the guide plates 21, 22. Contact between spray nozzle 24 and the air flow is thereby avoided. A good co-operation between the spraying agent flow 36 and the air flow 37 is on the other hand ensured. Further shown are the cylinders 40, 41, with which the position of both guide plates 21, 22 can be set and/or re-adjusted.

In the situation shown in fig. 4 a spray nozzle 42 is disposed downstream of the air outlet 30 and between both guide plates 21 and 22. In this case the spray nozzle 24 can in addition be directed in a required direction.

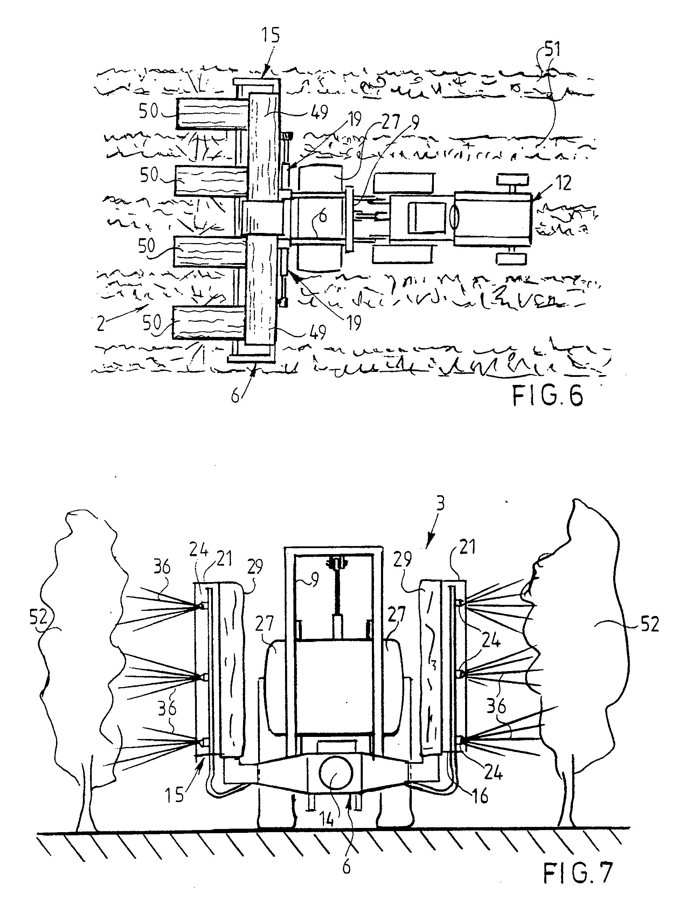

Fig. 5 shows another embodiment, whereby the hose 29 is provided with two air outlets 43 and 44 both of which are disposed on one side of hose 29 but enclose an acute angle $\alpha$ with each other. In this case the spray nozzles 45, 46 are directed for example substantially in the travel direction of the tractor 12, and the spray nozzles 47, 48 in the direction opposite to the direction of travel. The crop is in this way approached substantially on all sides by the spraying agent 28.

Fig. 6 shows the spray device 2 according to the invention, whereby the hoses 49 each comprise two transverse hoses 50, of which the air slits (not shown) are located in a plane parallel to a plant row 51, while being in a horizontal position. From each transverse hose 50 spraying agent is thus sprayed in sideways direction to the plant row 51 adjacent to it, the row therefore being sprayed simultaneously form both lateral directions.

Fig. 7 shows the situation whereby the spray device 3 in accordance with the invention uses spray booms which are located upright in planes parallel to, in this case, crop rows 52 formed by bushes, trees or cucumber plants.

It will be apparent that with the application as in fig. 6 and 7 spray boom configurations in accordance with fig. 3, 4 or 5 can be used.

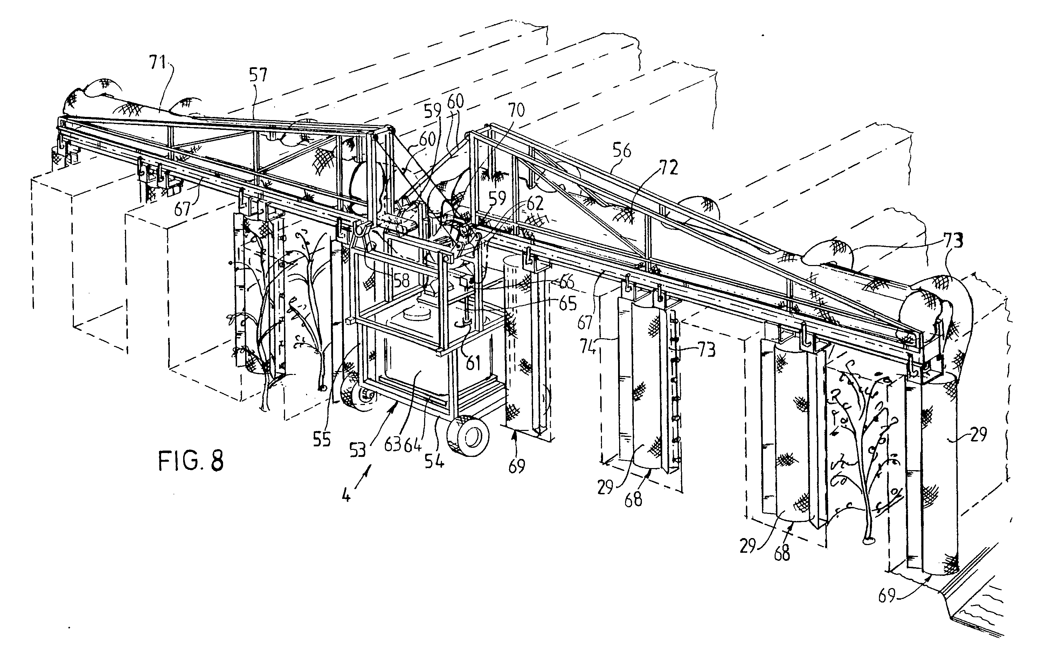

Finally, fig. 8 shows a spray device 4 which is incorporated into a vehicle 53 that forms the subject of a harvesting machine for another patent application submitted in the name of applicant. For a detailed description of this vehicle 53 reference is made to this other patent application.

Briefly, the vehicle 53 comprises a chassis 54 on which a vehicle superstructure 55 is mounted for rotation. Placed on the vehicle superstructure 55 are two booms 56 and 57 extending in sideways direction, which at one side support on and end in tilt supports 58, 59. Using tie rods 60 attached to the upper end of the booms the horizontal position of each boom can be set. Tie rods 60 are connected for this purpose to cranks 62 attached to a rotatable shaft 61.

The spraying agent reservoir 63 is placed on the carrier 64 intended for a holder. Spraying agent is fed via a riser pipe 65, a pump 66 and lines 67 to the spray booms 68, 69.

Via a fan 70 and main hoses 71 and 72 placed and resting in the booms 56 and 57 air under pressure is fed via connecting pieces 73 into the hoses 29 of the spray booms 68 and 69.

In the case of spray booms 68 pairs of air slits 43, 44 connect diametrically onto the hose 29, whereby each pair possesses a configuration as according to fig. 5. The spray boom 69 has a form corresponding to that of fig. 3, 4 or 5, as required for the crop for spraying.

## Claims

1. Spray device (1,2,3,4) comprising
   a frame (6,54); and
   at least one spray boom (15,16; 68,69) connected to the frame (6; 54) and carrying an air hose (29; 49,50; 71,72) connected via an air inlet to a fan (14;70) and having at least one air outlet (30; 43,44), and carrying spray nozzles (24; 45,46; 47,48) connected via lines (25,26) to a reservoir (27; 63) for spraying agent (28), for generating a spraying agent flow (36) cooperating with an air flow (37) leaving the air outlet (30),

**characterized in that** the spray boom (15,16; 68,69) comprises a framework (20) forming with the air hose (29; 49,50; 71,72) a slit-like air outlet (30; 43,44) which extends over a substantial part of the length of the spray boom (15,16), and comprising guiding means (21,22) for guiding the air flow (37) relative to the spraying agent flow (36) and/or the crop (51) to be sprayed.

**2.** Spray device (1) as claimed in claim 1, wherein the guiding means (21,22) comprise a guide plate (21,22) which is attached for pivoting via hinges (23) to the framework (20,38).

**3.** Spray device (1) as claimed in claim 1 or 2, having two slit-like air outlets (43,44) which are disposed at an acute angle alpha relative to each other.

**4.** Spray device (3) as claimed in claims 1-3, having two slit-like air outlets (15,16) which are facing away form each other in opposing directions.

**5.** Spray device (1) as claimed in claims 1-4, wherein the spraying nozzle (42; 46; 48) is arranged downstream of a slit-like air outlet (20; 44; 43).

**6.** Spray device (1) as claimed in claims 1-5, wherein the spraying nozzle (24; 45; 47) is arranged adjacent to the air flow (37) generated by the air outlet (30; 44; 43).

**7.** Spray device (2,3,4) as claimed in claims 1-7, wherein during spraying the slit-like air outlet (43,44) is located in a vertical plane parallel to a row of plants (51,52) and the spray boom (15,16; 68,69) is in a horizontal, upright and/or suspended position attached to the frame (6,54).

## Revendications

**1.** Appareil de pulvérisation (1, 2, 3, 4) comprenant un bâti (6, 54) et au moins une rampe de pulvérisation (15, 16 ; 68, 69) reliée au bâti (6 ; 54) et portant un tuyau d'air flexible (29 ; 49, 50 ; 71, 72) relié par l'intermédiaire d'une entrée d'air à un ventilateur (14 ; 70) et présentant au moins une sortie d'air (30 ; 43, 44) et comportant des buses de pulvérisation (24 ; 45, 46 ; 47, 48) reliées par l'intermédiaire de conduits (25, 26) à un réservoir (27 ; 63) pour l'agent de pulvérisation (28) pour émettre un jet d'agent de pulvérisation (36) coopérant avec un écoulement d'air (37) sortant de la sortie d'air (30),

caractérisé en ce que la rampe de pulvérisation (15, 16 ; 68, 69) comprend un châssis (20) formant avec le tuyau d'air flexible (29 ; 49, 50 ; 71, 72) une sortie d'air en forme de fente (30 ; 43, 44) qui s'étend sur une grande partie de la longueur de la rampe de pulvérisation (15, 16), et comprenant des moyens de guidage (21, 22) pour guider l'écoulement d'air (37) par rapport au jet d'agent de pulvérisation (36) et/ou de la culture (51) à asperger.

**2.** Appareil de pulvérisation (1) suivant la revendication 1, dans lequel les moyens de guidage (21, 22) comprennent un déflecteur (21, 22) qui est fixé sur le châssis (20, 38) pour pivoter par l'intermédiaire d'articulations (23).

**3.** Appareil de pulvérisation (1) suivant la revendication 1 ou 2, présentant deux sorties d'air en forme de fentes (43, 44) qui sont disposées en formant un angle aigu entre elles.

**4.** Appareil de pulvérisation (3) suivant l'une des revendications 1 à 3, présentant deux sorties d'air en forme de fente (15, 16) qui sont tournées l'une par rapport à l'autre dans des sens opposés.

**5.** Appareil de pulvérisation (1) suivant l'une des revendications 1 à 4, dans lequel la buse de pulvérisation (42 ; 46 ; 48) est placée en aval d'une sortie d'air en forme de fente (20 ; 44 ; 43).

**6.** Appareil de pulvérisation (1) suivant l'une des revendications 1 à 5, dans lequel la buse de pulvérisation (24 ; 45 ; 47) est placée au voisinage de l'écoulement d'air (37) émis par la sortie d'air (30 ; 44 ; 43).

**7.** Appareil de pulvérisation (2, 3, 4) suivant l'une des revendications 1 à 7, dans lequel, pendant la pulvérisation, la sortie d'air en forme de fente (43, 44) est située dans un plan vertical parallèle à une rangée de plantes (51, 52) et la rampe de pulvérisation (15, 16 ; 68, 69) est dans une position horizontale, verticale ou suspendue fixée au bâti (6, 54).

## Patentansprüche

1. Sprühvorrichtung (1,2,3,4) mit einem Rahmen (6,54) und wenigstens einem mit dem Rahmen (6;54) verbundenen Sprühausleger (15,16; 68,69), der einen durch einen Lufteinlaß an ein Gebläse (14;70) angeschlossenen und wenigstens einen Luftauslaß (30; 43,44) aufweisenden Luftschlauch (29; 49,50; 71,72) und Sprühdüsen (24; 45,46; 47,48) trägt, die über Leitungen (25,26) an einen Behälter (27; 63) für das Sprühmittel (28) angeschlossen sind, zum Erzeugen einer mit einer den Luftauslaß (30) verlassenden Luftströmung (37) zusammenwirkenden Sprühmittelströmung (36), dadurch gekennzeichnet, daß der Sprühausleger (15,16; 68,69) ein Rahmenwerk (20) aufweist, das mit dem Luftschlauch (29; 49,50; 71,72) einen sich über einen wesentlichen Teil der Länge des Sprühauslegers (15,16) erstreckenden, schlitzförmigen Luftauslaß (30; 43,44) bildet, und Leitmittel (21,22) zum Leiten der Luftströmung (37) bezüglich der Sprühmittelströmung (36) und/oder der zu besprühenden Feldfrucht (51) aufweist.

2. Sprühvorrichtung (1) nach Anspruch 1, wobei das Leitmittel (21,22) ein Leitblech (21,22) aufweist, das mithilfe von Drehachsen (23) an das Rahmenwerk (20,28) drehbar angeschlossen ist.

3. Sprühvorrichtung (1) nach Anspruch 1 oder 2, mit zwei schlitzförmigen Luftauslässen (43, 44), die in einem spitzen Winkel $\alpha$ zueinander angeordnet sind.

4. Sprühvorrichtung (3) nach den Ansprüchen 1 bis 3, mit zwei einander in entgegengesetzten Richtungen abgewandten schlitzförmigen Luftauslässen (15, 16).

5. Sprühvorrichtung (1) nach den Ansprüchen 1 bis 4, wobei die Sprühdüse (42; 46; 48) stromabwärts eines schlitzförmigen Luftauslasses (20; 44; 43) angeordnet ist.

6. Sprühvorrichtung (1) nach den Ansprüchen 1 bis 5, wobei die Sprühdüse (24; 45; 47) der von dem Luftauslaß (30; 44; 43) erzeugten Luftströmung (37) benachbart angeordnet ist.

7. Sprühvorrichtung (2,3,4) nach den Ansprüchen 1 bis 7, wobei während des Sprühens der schlitzförmige Luftauslaß (43,44) sich in einer zu einer Pflanzenreihe (51,52) parallelen Ebene befindet und der Sprühausleger (15,16; 68,69) an den Rahmen (6,54) in einer horizontalen, aufrechten und/oder hängenden Lage angeschlossen ist.

33
32
12
29
39
16
22
30
20
39
21
26
25
24
79
34
II
10
19
78
13
7
8
11
9
7
10
7
1
27
17
36
24
II
35
6
5
14
17
79
39
21
15

FIG.1

FIG. 2
29
19
30
38
38
23
23
20
78
17
21
22
FIG. 3
29
30
20
40
22
24
35
40
21
37
36
FIG.4
29
30
37
21
22
36
42
FIG. 5
29
43
44
47
45
36
48
46

15
51
50
49
19
27
9
50
12
6
50
2
50
19
49
6
FIG.6

3
24
21
36
29
9
29
21
52
27
27
52
24
36
24
36
36
15
14
16
24
6
FIG.7

73
29
69
73
68
29
72
56
73
68
29
74
67
66
65
70
62
59
69
60
59
60
61
54
64
63
58
53
4
55
57
71
67
FIG. 8